# EUROPÄISCHE PATENTSCHRIFT

(11) **EP 1 479 723 B1**
(45) Veröffentlichungstag und Bekanntmachung des Hinweises auf die Patenterteilung: **03.08.2011**
(21) Anmeldenummer: 03011284.1
(22) Anmeldetag: 17.05.2003
(51) Int. Cl.: C08L 23/14, C08L 51/06, C08J 5/18, C08L 77/12, B32B 27/32

(54) **Polypropylenionomere für Folien mit antistatischen und/oder nicht taubildenden Eigenschaften**
Polypropylene ionomer composition with antistatic and/or non-dew forming properties and films thereof
Composition de polypropylène-ionomères présentant des propriétés antistatiques et/ou ne formant pas de buée et ses films

(43) Veröffentlichungstag der Anmeldung: 24.11.2004
(73) Patentinhaber: A. SCHULMAN PLASTICS, 2880 Bornem (BE)
(72) Erfinder: Daponte, Tony, 2070 Zwijndrecht (BE); Janssens, Marcel, 9200 Dendermonde (BE)
(74) Vertreter: Luys, Marie-José A.H.

(56) Entgegenhaltungen:
- DE-C- 4 432 777
- PATENT ABSTRACTS OF JAPAN vol. 010, no. 017 (C-324), 23. Januar 1986 (1986-01-23) & JP 60 173047 A (DAINIPPON INK KAGAKU KOGYO KK), 6. September 1985 (1985-09-06)

## Beschreibung

Die Erfindung betrifft eine Polypropylenzusammensetzung mit permanenten antistatischen und/oder nicht-taubildenden Eigenschaften, ein Verfahren zur Herstellung der Polypropylenzusammensetzung, die Verwendung der Polypropylenzusammensetzung, sowie aus dieser Zusammensetzung hergestellte Folien.

Generell besitzen Polyolefinfolien den Nachteil, dass sie sich bei der Verarbeitung relativ schnell statisch aufladen und aufgrund dieser statischen Aufladung aneinander haften, was die maschinelle Weiterverarbeitung solcher Folien und beispielsweise das Öffnen von aus diesen Folien hergestellten Tüten erschwert. Um diese statischen Aufladungen zu verhindern, werden den Polyolefinen vor der Verarbeitung antistatische Mittel zugeführt, die die statische Aufladung der hergestellten Produkte unterdrücken.

Weiterhin müssen Polyolefinfolien für Anwendungen, in denen sie transparent sein und bleiben müssen, mit entsprechenden nicht-taubildenden Mitteln ausgerüstet werden. So ist es beispielsweise bei der Verwendung als Verpackungsmaterial wünschenswert, dass die verpackte Ware für den Verbraucher durch die Verpackungsfolie hindurch sichtbar und gut erkennbar bleibt. Folien mit diesen Eigenschaften werden weiterhin auch für Gewächshäuser verwendet, wo es ebenfalls notwendig ist, dass sie ihre lichtdurchlässigen Eigenschaften dauerhaft behalten. Anti-Taumittel verhindern, dass in der Verpackung befindliche Feuchtigkeit auf der Innenseite an der Folienoberfläche kondensiert und so die Transparenz der Folie nachteilig beeinflusst.

Aus dem Stand der Technik sind mehrere Substanzen bekannt, die als solche antistatischen und Anti-Taumittel verwendet werden. Einige dieser Substanzen besitzen jedoch den Nachteil, dass sie aus dem Inneren der Folie allmählich an die Oberfläche diffundieren, was zu einer allmählichen Verschlechterung der antistatischen und nicht-taubildenden Eigenschaften der Folie führt.

Derartige Diffusionsprozesse führen aber auch zu einer unerwünschten Veränderung der physikalischen und optischen Eigenschaften der Folie. So werden die Folien klebrig; es kommt zu einem sichtbaren Ausblühen von Substanzen, was die Transparenz stört. Auch die antistatischen Eigenschaften solcher Folien werden mit der Zeit ungleichmäßig.

Die EP 0 781 308 beschreibt dagegen eine Polyolefinzusammensetzung mit permanenten antistatischen und/oder nicht-taubildenden Eigenschaften, wobei die Zusammensetzung ein Polyolefin, ein hydrophiles Polyetherblockamid und ein Maleinsäureanhydrid enthaltendes Polyolefinharz oder Polyolefinelastomer oder ein Styrolelastomer enthält.

Des Weiteren offenbart FR 2 812 647 eine Zusammensetzung zur Herstellung einer atmungsaktiven Folie, die eine Mischung aus einem oder mehreren aus Ethylen und Methacrylsäurealkylester, Methacrylsäure oder deren lonomeren, oder einem vinylischen Monomer gebildeten Copolymeren und/oder einem funktionalisierten Polyethylen sowie einem Polyetherblockamid-Copolymer umfasst. Die Funktionalisierung des Polyethylens erfolgt dabei bevorzugt durch ungesättigte Carbonsäuren, Carbonsäureanhydride oder Epoxide.

Folien mit permanenten antistatischen Eigenschaften sind ebenfalls aus der EP 0 476 895 bekannt. Die darin beschriebenen Folien enthalten ein Polyetherblockamid-Copolymer sowie ein dazu kompatibles Polymer, welches bevorzugt aus Carbonyl-haltigen Polymeren ausgewählt wird, wie beispielsweise aus Polyamiden, Ethylen/Säure-Co- bzw. Terpolymeren, die auch teilweise oder vollständig neutralisiert sein können, und Esterpolymeren.

Obwohl die bisher verfügbaren Folien durchaus bereits permanente antistatische und nicht-taubildende Eigenschaften aufweisen, liegt immer noch die Bestrebung vor, Systeme zu entwickeln, in denen die jeweiligen Eigenschaften weiter verbessert sind, um so auch den höchsten Anforderungen gerecht werden zu können.

Davon ausgehend ist es daher die technische Aufgabe der vorliegenden Erfindung, eine polymere Zusammensetzung zur Verfügung zu stellen, die weiter verbesserte antistatische und nicht-taubildende Eigenschaften aufweist und den bisher im Stand der Technik beschriebenen Systemen überlegen ist. Die Zusammensetzung soll daher dauerhaft antistatisch und gegen Taubildung ausgerüstet sein und zwar ohne dass diese Substanzen bei aus diesen Zusammensetzungen hergestellten Folien allmählich an die Oberfläche der Folie diffundieren. Das Ausblühen von Substanzen soll vermieden werden und die Transparenz der aus der Zusammensetzung hergestellten Folie erhalten bleiben, insgesamt also die optischen Eigenschaften verbessert werden. Zudem ist erwünscht, dass die aus der Zusammensetzung hergestellten Folien ein gutes Haftungsverhalten gegenüber anderen Folienmaterialien, insbesondere Polyolefinen, aufweisen, um aus mehreren Schichten zusammengesetzte stabile koextrudierte Folien herstellen zu können.

Diese technische Aufgabe wird gelöst durch eine Polypropylenzusammensetzung gemäß Ansprüchen 1-12 mit permanenten antistatischen und/oder nicht-taubildenden Eigenschaften enthaltend ein Random-Copolymer Polypropylen und/oder ein Random-Terpolymer Polypropylen und ein hydrophiles Polyetherblockamid, wobei die Polypropylen-Komponenten mindestens eine ungesättigte Carbonsäure-Verbindung enthalten.

Aus der erfindungsgemäßen Polypropylennzusammensetzung können Folien hergestellt werden, die hinsichtlich ihrer Oberflächeneigenschaften wie Oberflächenwiderstand und Entladungszeit, bezüglich der optischen sowie der nicht-taubildenden Eigenschaften gegenüber den Materialien des Standes der Technik weiter verbessert sind.

Das Random-Copolymer- bzw. das Random-Terpolymer-Polypropylen enthält neben Propylen als Monomer bevorzugt unabhängig voneinander ausgewählte geradkettige oder verzweigte α-Olefine mit 2 bis 10 Kohlenstoffatomen als Comonomere. Besonders bevorzugt finden als Comonomere Ethylen, Butylen und Hexen Verwendung. Die erfindungsgemäße Zusammensetzung kann dabei entweder jeweils nur ein Random-Copolymer-Polypropylen oder nur ein Random-Terpolymer-Polypropylen oder eine Mischung aus verschiedenen Copolymeren, verschiedenen Terpolymeren oder eine Mischung aus Co- und Terpolymeren enthalten. Bevorzugt liegt entweder nur ein Random-Copolymer-Polypropylen oder nur ein Random-Terpolymer-Polypropylen vor.

Unter einer "ungesättigten Carbonsäure-Verbindung" sind vorliegend ungesättigte Verbindungen zu verstehen, die einen freien Carbonsäure-Rest oder einen Carbonsäurealkylester-Rest aufweisen oder ein Carbonsäureanhydrid ausbilden, also einen unter Bildung von lonomeren neutralisierbaren Säurerest. Vorzugsweise kommen ungesättigte Carbonsäureanhydride zum Einsatz, insbesondere Maleinsäureanhydrid.

Die ungesättigte Carbonsäure-Verbindung kann sowohl auf das Random-Co- bzw. das Random-Terpolymer Polypropylen aufgepfroft sein, als auch selber ein Comonomer darstellen, das direkt in das Copolymer bzw. Terpolymer eingebaut wird. In einer besonders vorteilhaften Ausgestaltung wird die ungesättigte Carbonsäure-Verbindung jedoch auf das jeweilige Polypropylen aufgepfropft.

In der Polypropylenzusammensetzung beträgt die Konzentration an ungesättigter Carbonsäure-Verbindung im Copolymer bzw. Terpolymer 0,05 bis 5 Gew.%. Besonders vorteilhaft liegt die Konzentration an ungesättigter Carbonsäure-Verbindung zwischen 0,23 und 2,10 Gew.%.

Weiterhin ist bevorzugt, dass die ungesättigte Carbonsäure-Verbindung im Copolymer bzw. Terpolymer als Salz von Elementen vorliegt, die ausgewählt sind aus der Gruppe der Alkalimetalle, Erdalkalimetalle, der zweiten Nebengruppe des Periodensystems oder einer Mischung daraus. Diese Copolymere werden dann als lonomere bezeichnet. In der Polypropylenzusammensetzung liegen die Säuregruppen des Copolymers zu 0,1 bis 100 %, besonders bevorzugt zu 10 bis 90 % als Salze vor. Dabei sind die an der Salzbildung beteiligten Elemente vorzugsweise ausgewählt aus der Gruppe Natrium, Kalium, Magnesium und Zink. Ganz besonders bevorzugt werden die Salze mit Natrium-Ionen oder mit Zink-Ionen gebildet. In einer weiteren Ausführungsform werden die Salze als Doppelsalze mit Natrium und Zink-Ionen gebildet.

Zur Herstellung der Random-Copolymer- bzw. Random-Terpolymer-Polypropylene, die in der vorliegenden Erfindung bei einer besonders vorteilhaften Ausgestaltung zum Einsatz kommen, erfolgt zunächst das Pfropfen des Random-Co- bzw. Random-Terpolymer-Polypropylens mit den oben angegebenen Mengen an ungesättigter Carbonsäure-Verbindung, vorzugsweise Maleinsäureanhydrid. Vorteilhafterweise enthält bei Verwendung des Copolymers dieses als weiteres Monomer Ethylen, während das Terpolymer bevorzugt als Comonomere Ethylen, Butylen, Hexen oder alpha-Methylpenten enthält. In einem zweiten Schritt erfolgt die Neutralisation der Säure-Funktionalität der gepfropften ungesättigten Carbonsäure-Verbindung mit den oben genannten Kationen, insbesondere mit Natrium, Zink oder deren Mischung. Die dabei erhaltenen Polypropylen-Ionomere, die in der vorliegenden Erfindung verwendet werden können, werden beispielsweise von BP-Amoco-Solvay unter dem Namen *PRIEX* vertrieben.

In einer weiteren Ausführungsform enthält die erfindungsgemäße Zusammensetzung zusätzlich ein Maleinat enthaltendes Polyethylen niedriger Dichte als Kompatibilisator in einer Konzentration von 1 bis 20 Gew.-%, wobei der Gehalt an Maleinat 0,1 bis 2 Gew.-%, vorzugsweise 0,5 bis 1,0 Gew.-% beträgt.

In einer bevorzugten Ausführungsform besitzt das Polyetherblockamid die Formel I 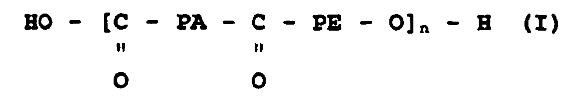 wobei PA das Polyamidsegment und PE das Polyethersegment angibt und 10 ≤ n ≤ 60 ist.

Als Polyethersegment kann ein Polyether der Formel II,

**[- CH₂ - CH₂ - O -]ₘ (II)**

der Formel III, 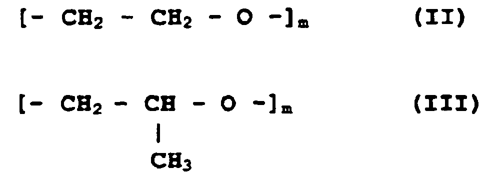 oder der Formel IV

**[CH₂ - CH₂** - **CH₂ - CH₂ - O -]ₘ (IV)**

eingesetzt werden, wobei m eine ganze Zahl von 10 bis 100 ist.

Als Polyamidsegment können Polyamide ausgewählt aus der Gruppe Polyamid 6; Polyamid 6,6; Polyamid 11; Polyamid 12; Polyamid 6,12; Polyamid 6,11 oder Gemische derselben enthalten sein.

Besonders bevorzugt ist ein Polyetherblockamid, das als Polyamidsegment Polyamid 12 und als Polyethersegment das Segment der Formel II

**[- CH₂ - CH₂ - O -]ₘ (II)**

besitzt, und wobei m eine ganze Zahl von 10 bis 100 ist, in der erfindungsgemäßen Polypropylenzusammensetzung enthalten.

Die Herstellung der erfindungsgemäßen Polyolefine erfolgt durch Compoundierung der einzelnen Bestandteile in einem ZSK 25 Mega-Compoundierer (von Cuperion) bei 180 bis 240 °C. Die Mischung wird nach dem Schmelzen in einem Wasserbad abgekühlt und ggf. granuliert. Das so hergestellte Granulat kann anschließend in Folien jeglicher Dicke überführt werden, in Profile extrudiert werden oder in fertige Artikel spritzgegossen werden.

So können beispielsweise Folien hergestellt werden, die 20 Gew.-% Polyetherblockamid und 80 Gew.-% Random-Copolymer-Polypropylen als Zinklonomer mit 0,55 Gew.% Maleinsäureanhydrid enthalten. Ein weitere vorteilhaftes Beispiel betrifft Folien, die 20 Gew.-% Polyetherblockamid und 80 Gew.-% des Natrium-Ionomers des Random-Terpolymer-Polypropylens mit 2,10 Gew.% Maleinsäureanhydrid enthalten. Derartige Folien besitzen hervorragende, dauerhaft haltbare antistatische und nicht-taubildende Eigenschaften sowie einen gesteigerten Glanz. Die erfindungsgemäßen Zusammensetzungen sind auch für den Spritzguss geeignet und die erhaltenen Formkörper besitzen hervorragende dauerhafte antistatische Eigenschaften.

Eine typische Anwendung für derartige Polypropylene sind beispielsweise sogenannte biaxial orientierte Polyethylen- oder Polypropylenfilme, wobei das erfindungsgemäße Polypropylen beim Extrudieren in die Randzonenschicht einer koextrudierten Mehrschichtfolie eingebracht wird. Hierdurch wird eine Folie erhalten, die über eine besonders gute Siegelfähigkeit verfügt, hervorragende optische und antistatische Eigenschaften aufweist, sowie keine Diffusion der Additive an die Oberfläche der Folie zeigt. Die erfindungsgemäße Polypropylen-Zusammensetzung ist daher den aus dem Stand der Technik bekannten ähnlichen antistatischen und/oder mit Antitaumitteln ausgerüsteten üblicherweise Polyethylen enthaltenden Systemen erheblich überlegen.

Mit dem erfindungsgemäßen Polypropylenen können beispielsweise auch Formkörper, Folien und Extrusionsprodukte hergestellt werden. Dieses Material ist für Extrusionsverfahren genauso geeignet wie für das Spritzgießen. Die aus diesem Grundmaterial hergestellten Produkte besitzen ebenfalls hervorragende antistatische und nicht-taubildende Eigenschaften.

Somit kann das erfindungsgemäße Polypropylen in idealer Weise zur Herstellung von Polyolefin-Folien mit verbesserten antistatischen und nicht-taubildenden Eigenschaften verwandt werden. Solche Folien werden beispielsweise zur Herstellung von Verschlussdeckeln für Becher verwendet, die zur Verpackung von Milchprodukten oder Milchmischprodukten wie Joghurt, Quark, Sahne, Pudding etc. eingesetzt werden. Aus dem Polypropylen können so Folien jeglicher Dicke und beliebige Formkörper hergestellt werden, die hervorragende physikalische, chemische und mechanische Eigenschaften besitzen.

So wird entsprechend eine Folie mit permanenten antistatischen und nicht-taubildenden Eigenschaften beansprucht, die aus der erfindungsgemäßen Polypropylenzusammensetzung hergestellt wird. In einer bevorzugten Ausführungsform stellt die Folie eine einfache einschichtige Folie aus der erfindungsgemäßen Polypropylenzusammensetzung dar.

In einer weiteren bevorzugten alternativen Ausführungsform stellt die Folie eine koextrudierte Folie mit mindestens zwei Schichten dar, in der mindestens eine Schicht die erfindungsgemäße Polypropylen-Zusammensetzung enthält. So kann z.B. eine Folie mit der Schichtenfolge A-B, A-B-A, A-B-C-B-A, usw. hergestellt werden, mit einer B-Schicht oder mit einer C-Schicht, enthaltend Polyolefin ausgewählt aus der Gruppe Polyethylen, lineares Polyethylen niedriger Dichter, Polyethylen niedriger Dichte, lineares Metallocen-Polyethylen niedriger Dichte, Polypropylen-Homopolymer, Polypropylen-Block-Copolymer, Polypropylen-Random-Co- oder Terpolymer, Ethylen-Vinylester-Copolymer, Polybutylen, Polymethylpenten, und einer A-Schicht enthaltend mindestens ein Random-Copolymer Polypropylen und/oder mindestens ein Random-Terpolymer Polypropylen und ein hydrophiles Polyetherblockamid, wobei die Polypropylen-Komponenten mindestens eine ungesättigte Carbonsäure-Verbindung enthalten.

Besonders bevorzugt ist eine mehrschichtige Folie mit der Schichtfolge A-B oder A-B-A, wobei die Außenschicht (A-Schicht), hergestellt aus den erfindungsgemäßen Polyolefinen, etwa 0,5 bis 20 µm, vorzugsweise 5 µm, und die B-Schicht oder die weiteren Schichten den Rest der Folienstärke ausmachen. So kann die Stärke einer mehrschichtigen Folie beispielsweise insgesamt etwa 50 µm betragen. Bevorzugt weist die B-Schicht eine Dicke von 95 µm auf, so dass sich eine Gesamtschichtdicke einer vorteilhaften Folie von 100 µm ergibt.

Die folgenden Beispiele sollen die Erfindung näher erläutern, ohne dass die Erfindung jedoch auf sie beschränkt ist. In diesen Beispielen werden aus den erfindungsgemäßen Polypropylenen verschiedene Folien hergestellt und deren Eigenschaften mit denen einer herkömmlichen Zusammensetzung aus Polyetherblockamid und dem Natrium-Ionomer von Ethylen-Acrylsäure-Copolymer verglichen.

### Beispiele

Es werden verschiedene Polypropylenzusammensetzungen hergestellt, die in Tabelle 1 wiedergegeben werden. Das Vergleichsbeispiel 1 enthält eine Mischung aus Polyetherblockamid und das Natrium-Ionomer von Ethylen-Acrylsäure-Copolymer. In den Beispielen 2 bis 4 wurden diese durch die sauren Random-Co- bzw. Terpolymer-Polypropylene bzw. deren Ionomere gemäß der Erfindung ersetzt. Aus diesen Polypropylenzusammensetzungen wurden Folien hergestellt.

Die Herstellung der erfindungsgemäßen Polypropylenzusammensetzungen erfolgt durch Compoundierung der einzelnen Bestandteile in einem ZSK 25 Mega-Compoundierer (von Cuperion). Die Mischung wird anschließend in Pellets granuliert. Das so hergestellte Granulat wurde dann in einer Collin-Laboratory-Cast-Coextrusion-Filmline zu koextrudierten Folien der Schichtenfolge A-B mit einer Gesamtdicke von 100 µm, einer B-Schicht aus 95 µm Polypropylen Homopolymer und einer A-Schicht von 5 µm aus verschiedenen erfindungsgemäßen lonomeren von Random-Co- bzw. Terpolymer-Polypropylenen verarbeitet, wie in Tabelle 1 beschrieben. Die Random-Co- bzw. Terpolymere enthielten als weitere Comonomere Ethylen, Butylen, Hexen oder alpha-Methylpenten und wurden unter dem Namen *PRIEX* von Solvay/BP/Amoco bezogen.

Bei den einzelnen Produkten wurde jeweils der Oberflächenwiderstand in Ohm, der Ladungsabfall in Sekunden, und die Oberflächeneigenschaften, wie Glanz (bestimmt gemäß ASTM D 2457) und Trübung (bestimmt gemäß ASTM D 1003) auf der A-Seite der koextrudierten Folien ermittelt.

**Tabelle 1**

| Beispiele | V1 | 2 | 3 | 4 |
|---|---|---|---|---|
| Zusammensetzung (Gew.%) | | | | |
| Random coPP-Na lonomer/ 0,23 % MAH | - | 80 | - | - |
| Random coPP-Zn lonomer/ 0,55 % MAH | - | - | 80 | - |
| Random terPP-Na lonomer/ 2,10 % MAH | - | - | - | 80 |
| Polyether-Blockamid | 20 | 20 | 20 | 20 |
| Natrium-Ionomer des EAA^{(a)} | 80 | - | - | - |
| | | | | |
| Oberflächenwiderstand (Ohm) | 10¹¹ | 10¹¹ | 10¹¹ | 10¹¹ |
| Entladungszeit (s) | 0,5 | 0,3 | 0,2 | 0,1 |
| Glanz in % bei 45 °Messwinkel | 55 | 45 | 56 | 61 |
| Trübung in % | 10 | 11 | 9 | 6 |

| | | | | |
|---|---|---|---|---|
| coPP Copolymer-Poylpropylen terPP Terpolymer-Polypropylen MAH Maleinsäureanhydrid EAA-Copolymer Ethylen-Acrylsäure-Copolymer (a) als Natrium-Ionomer wurde Iotek® 3110 von ExxonMobil verwendet | | | | |

Aus der Tabelle ist zu entnehmen, dass bei der üblicherweise verwendeten Folie aus dem Natium-Ionomer des Ethylen-Acrylsäure-Copolymers und Polyetherblockamid noch eine Entladungszeit von 0,5 s zu beobachten ist. Bei Ausrüstung der Folien gemäß den Beispielen 2 bis 4 mit der erfindungsgemäßen Zusammensetzung bleibt der Oberflächenwiderstand im wesentlichen konstant, während die Entladungszeit, der Glanz und die Trübung gegenüber dem Stand der Technik (Vergleichsbeispiel 1) wesentlich verbessert werden. Lediglich in Beispiel 2 ist bei einer verringerten Entladungszeit eine geringfügige Verschlechterung des Glanzes und der Trübung zu beobachten. Damit ist ersichtlich, dass die Folien aus den erfindungsgemäßen Polypropylen-Zusammensetzungen bessere antistatischen Eigenschaften und eine geringere Neigung zur Taubildung aufweisen als die des Vergleichsbeispiels 1 gemäß dem Stand der Technik.

Des weiteren wurde das Haftverhalten einer aus den erfindungsgemäßen Polypropylen-Zusammensetzungen gemäß Tabelle 1 erhaltenen Schicht bei Koextrusion mit einer Polypropylen- bzw. einer Polyethylen-Schicht unter Erhalt einer zweischichtigen koextrudierten Folie untersucht. Dabei wurde auf einer Collin Koextrusions-Linie eine Folie in einer Dicke von 100 µm hergestellt. Als A-Schicht fanden die Zusammensetzungen gemäß Tabelle 1 Verwendung. Als B-Schicht wurde in einem ersten Versuch Polyethylen niedriger Dichte (LDPE) und in einem zweiten Versuch Homopolymer Polypropylen eingesetzt.

Dabei erfolgte zunächst eine Versiegelung der Folien mittels einer aus dem Stand der Technik bekannten Labor-Versiegelungsausrüstung bei verschiedenen Temperaturen. Es folgte eine 24 stündige Konditionierung der Folien bei 23 °C und einer relativen Feuchtigkeit (RH) von 50% sowie eine Zugprüfung an der Versiegelung. Eine GUTE Versiegelung ohne Ablösung der A-Schicht als Ergebnis wurde mit "G" gekennzeichnet, eine LEICHTE Ablösung der A-Schicht mit "L" und eine SCHLECHTE Versiegelung mit einer Ablösung in größerem Umfang mit "S".

**Tabelle 2**

| | | Qualität der Versiegelung | | | | | |
|---|---|---|---|---|---|---|---|
| | Material der B-Schicht | Polypropylen | | | Polyethylen | | |
| | Versiegelungstemperatur (°C) | 120 | 125 | 130 | 120 | 125 | 130 |
| Zusammensetzung | | | | | | | |
| V1 | | S | S | S | S | S | L |
| 2 | | L | G | G | L | G | G |
| 3 | | G | G | G | G | G | G |
| 4 | | G | G | G | G | G | G |

Die In Tabelle 2 aufgezeigten Ergebnisse verdeutlichen, dass bei den erfindungsgemäßen Polypropylen-Zusammensetzungen abgesehen von zwei Ausnahmen, in denen eine leichte Ablösung der A-Schicht zu beobachten war, ein ausgezeichnetes Haftungsverhalten vorlag. Im Gegensatz dazu überwiegte bei Verwendung der Zusammensetzung gemäß dem Stand der Technik als A-Schicht eine schlechte Versiegelung.

Insgesamt ist also festzustellen, dass Folien, die die erfindungsgemäßen Polypropylen-Zusammensetzungen aufweisen im Vergleich zu den Zusammensetzungen des Standes der Technik nicht nur gesteigerte antistatische und nicht-taubildende Eigenschaften aufweisen, sondern darüber hinaus auch verbesserte optische Eigenschaften sowie ein sehr gutes Haftverhalten zeigen, wenn sie koextrudiert sind mit Polyethylen niedriger Dichte.

## Patentansprüche

1. Polypropylenzusammensetzung mit permanenten antistatischen und/oder nicht-taubildenden Eigenschaften, enthaltend mindestens ein Random-Copolymer Polypropylen und/oder mindestens ein Random-Terpolymer Polypropylen und ein hydrophiles Polyetherblockamid, wobei die Polypropylen-Komponenten mindestens eine ungesättigte Carbonsäure-Verbindung enthalten, wobei das Random-Copolymer Polypropylen und/oder das Random-Terpolymer Polypropylen 0,05 bis 5,0 Gew.% an gepfropfter ungesättigter Carbonsäure-Verbindung enthalten und die ungesättigte Carbonsäure-Verbindung zu 0,1 bis 100% neutralisiert ist.

2. Polypropylenzusammensetzung nach Anspruch 1, **dadurch gekennzeichnet, dass** die Comonomere des Random Co- und/oder Terpolymer Polypropylens unabhängig voneinander ausgewählt geradkettige oder verzweigte alpha -Olefine mit 2 bis 10 Kohlenstoffatomen sind.

3. Polypropylenzusammensetzung nach den Ansprüchen 1 oder 2, **dadurch gekennzeichnet, dass** die ungesättigte Carbonsäure-Verbindung auf das Random-Copolymer und das Random-Terpolymer aufgepfropft ist.

4. Polypropylenzusammensetzung nach den Anspruchen 1 bis 3, **dadurch gekennzeichnet, dass** die Neutralisation der ungesättigten Carbonsäure-Verbindung mit Kationen ausgewählt aus der Gruppe der Alkalimetalle, der Erdalkalimetalle und den Elementen der 2. Nebengruppe oder einer Mischung daraus erfolgt.

5. Polypropylenzusammensetzung nach Anspruch 4, **dadurch gekennzeichnet, dass** als Kationen Zink, Natrium oder Mischungen daraus verwendet werden.

6. Polypropylenzusammensetzung nach den Ansprüchen 1 bis 5, **dadurch gekennzeichnet, dass** die ungesättigte Carbonsäure-Verbindung ein ungesättigtes Carbonsäureanhydrid ist.

7. Polypropylenzusammensetzung nach Anspruch 6, **dadurch gekennzeichnet, dass** das ungesättigte Carbonsäureanhydrid Maleinsäureanhydrid ist.

8. Polypropylenzusammensetzung nach den Ansprüchen 1 bis 7, **dadurch gekennzeichnet, dass** der Gehalt an Polyetherblockamid in der Polypropylenzusammensetzung 10 bis 50 Gew.% beträgt.

9. Polypropylenzusammensetzung nach den Ansprüchen 1 bis 8, **dadurch gekennzeichnet, dass** das Polyetherblockamid die Formel
HO-[CO-PA-CO-PE-O]ₙ-H (I)
besitzt und PA das Polyamidsegment und PE das Polyethersegment angibt und 10 ≤ n ≤ 60 ist.

10. Polypropylenzusammensetzung nach Anspruch 9, **dadurch gekennzeichnet, dass** das Polyethersegment ein Polyether der Formel II[-CH2-CH2-O-]m (II), der Formel
(III) [-CH₂-CH(CH₃)-O-]ₘ
oder der Formel IV [CH2-CH2-CH2-CH2-O-]m (IV) ist und m eine ganze Zahl von 10 bis 100 ist.

11. Polypropylenzusammensetzung nach den Ansprüchen 9 oder 10, **dadurch gekennzeichnet, dass** das Polyamidsegment ausgewählt ist aus der Gruppe Polyamid 6; Polyamid 6,6; Polyamid 11; Polyamid 12; Polyamid 6,12; Polyamid 6,11.

12. Polypropylenzusammensetzung nach den Ansprüchen 9 bis 11 **dadurch gekennzeichnet, dass** das Polyamidsegment Polyamid 12 ist und das Polyethersegment die Formel II [-CH2-CH2-O-]m (II) besitzt und m eine ganze Zahl von 10 bis 100 ist.

13. Verfahren zur Herstellung der Polypropylenzusammensetzung gemäss den Ansprüchen 1 bis 12, **dadurch gekennzeichnet, dass** die Komponenten in einer Compoundiereinrichtung gemischt und bei 180 bis 240 DEG C geschmolzen werden, in einem Wasserbad abgekühlt und anschliessend granuliert werden.

14. Verwendung der Polypropylenzusammensetzung gemäss den Ansprüchen 1 bis 12 zur Herstellung von zur Herstellung von Polypropylenfolien mit verbesserten antistatischen und nicht-taubildenden Eigenschaften.

15. Folie aus der Polypropylenzusammensetzung gemäss den Ansprüchen 1 bis 12 mit permanenten antistatischen und nicht-taubildenden Eigenschaften.

16. Folie nach Anspruch 15, **dadurch gekennzeichnet, dass** die Folie eine einfache Folie aus der Polypropylenzusammensetzung gemäss den Ansprüchen 1 bis 12 ist.

17. Folie nach Anspruch 15, **dadurch gekennzeichnet, dass** die Folie eine koextrudierte Folie mit mindestens zwei Schichten ist, in der mindestens eine Schicht die Polypropylenzusammensetzung gemäss den Ansprüchen 1 bis 12 enthält.

18. Folie nach Anspruch 17, **dadurch gekennzeichnet, dass** die Folie eine mehrschichtige koextrudierte Folie mit der Schichtenfolge A-B oder A-B-A, A-B-C-B-A ist, wobei die B-Schicht und/oder die C-Schicht Polyolefin enthält ausgewählt aus der Gruppe Polyethylen, lineares Polyethylen niedriger Dichte, Polyethylen niedriger Dichte, lineares Metallocen-Polyethylen niedriger Dichte, Polypropylen-Homopolymer, Polypropylen-Block-Copolymer, Polypropylen-Random-Co- oder Terpolymer, Ethylen-Vinylester-Copolymer, Polybutylen, Polymethylpenten, und die A-Schicht die Polypropylenzusammensetzung gemäss den Ansprüchen 1 bis 12 enthält.

19. Folie nach Anspruch 18, **dadurch gekennzeichnet, dass** die A-Schicht etwa 0,5 bis 20 mu m beträgt und die weiteren Schichten den Rest der Folienstärke ausmachen.

## Claims

1. A polypropylene composition with permanent antistatic and/or non-dew-forming properties, comprising at least one polypropylene random copolymer and/or at least one polypropylene random terpolymer and a hydrophilic block polyether amide, whereby the polypropylene components comprise at least one unsaturated carboxylic acid compound, whereby the polypropylene random copolymer and/or the polypropylene random terpolymer comprises from 0.05 to 5 %wt of grafted unsaturated carboxylic acid compound and the unsaturated carboxylic acid compound is neutralized for 0.1 to 100 %.

2. The polypropylene composition according to claim 1, **characterized in that** the comonomers of the polypropylene random co- and/or terpolymers are independently from each other selectedfrom straight chain and branched alpha olefins with 2 to 10 carbon atoms.

3. The polypropylene composition according to claim 1 or 2, **characterized in that** the unsaturated carboxylic acid compound is grafted onto the random copolymer and onto the random terpolymer.

4. The polypropylene composition according to any one of claims 1 to 3, **characterized in that** the unsaturated carboxylic acid compound is neutralized with cations selected from the group consisting of alkali metals, earth alkali metals and elements of the group IIB of the Periodic Table, and mixtures thereof.

5. The polypropylene composition according to claim 4, **characterized in that** as cations zinc, sodium or mixtures thereof are used.

6. The polypropylene composition according to any one of claims 1 to 5, **characterized in that** the unsaturated carboxylic acid compound is an unsaturated carboxylic acid anhydride.

7. The polypropylene composition according to claim 6, **characterized in that** the unsaturated carboxylic acid anhydride is maleic acid anhydride.

8. The polypropylene composition according to any one of claims 1 to 7, **characterized in that** the amount of block polyether amide in the polypropylene composition is from 10 to 50 %wt.

9. The polypropylene composition according to any one of claims 1 to 8, **characterized in that** the block polyether amide has the formula I
HO-[CO-PA-CO-PE-O]ₙ-H (I)
whereby PA indicates the polyamide fraction and PE the polyether fraction and 10 ≤n ≤ 60.

10. The polypropylene composition according to claim 9, **characterized in that** the polyether fraction is a polyether having the formula II [-CH₂-CH₂-O-]ₘ (II), the formula III
[-CH₂-CH(CH₃)-O-]ₘ (III)
or the formula IV [CH₂-CH₂-CH₂-CH₂-O]ₘ (IV) and whereby m is an integer from 10 to 100.

11. The polypropylene composition according to claims 9 or 10, **characterized in that** the polyamide fraction is selected from the group consisting of polyamide 6; polyamide 6,6; polyamide 11; polyamide 12; polyamide 6,12; and polyamide 6,11.

12. The polypropylene composition according to any one of claims 9 to 11, **characterized in that** the polyamide fraction is polyamide 12 and the polyether fraction has the formula II [-CH₂-CH₂-O-]ₘ (II) and wherein m is an integer from 10 to 100.

13. A process for the production of the polypropylene composition according to any one of claims 1 to 12, **characterized in that** the components are mixed in a compounding installation and are molten at 180°C to 240° C, are cooled down in a water bath, and are subsequently granulated.

14. The use of a polypropylene composition according to any one of claims 1 to 12 for the production of polypropylene film with improved antistatic and non-dew-forming properties.

15. A film of the polypropylene composition according to any one of claims 1 to 12 having permanent antistatic and non-dew-forming properties.

16. The film according to claim 15, **characterized in that** the film is a simple film from the polypropylene composition according to any one of claims 1 to 12.

17. The film according to claim 15, **characterized in that** the film is a co-extruded film having at least two layers, of which at least one layer comprises the polypropylene composition according to any one of claims 1 to 12.

18. The film according to claim 17, **characterized in that** the film is a multilayer co-extruded film having the layer order A-B or A-B-A, A-B-C-B-A, whereby the B-layer and/or the C-layer comprises a polyolefin selected from the group consisting of polyethylene, linear low density polyethylene, low density polyethylene, linear low density metallocene polyethylene, polypropylene homo polymer, polypropylene block copolymer, polypropylene random co- or terpolymer, ethylene vinylester copolymer, polybutylene, polymethylpentene, and the A-layer comprises the polypropylene composition according to any one of claims 1 to 12.

19. The film according to claim 18, **characterized in that** the A layer has a thickness from 0.5 and 20 µm and **in that** the other layers determine the remainder of the strength of the film.

## Revendications

1. Composition de polypropylène présentant des propriétés permanentes antistatiques et / ou anti-rosée, comprenant au moins un copolymère statistique de polypropylène et / ou au moins un terpolymère statistique de polypropylène et un polyéther - bloc - amide hydrophile, les composants polypropylène comprenant au moins un composé d'acide carboxylique insaturé, le copolymère statistique de polypropylène et/ou le terpolymère statistique de polypropylène comprenant de 0,05 à 5,0 % en poids d'un composé d'acide carboxylique insaturé greffé et le composé d'acide carboxylique insaturé étant neutralisé de 0,1 à 100 %.

2. Composition de polypropylène selon la revendication 1, **caractérisée en ce que** les comonomères des co- et / ou terpolymères statistiques de polypropylène sont choisis indépendamment les uns des autres parmi des alpha-oléfines linéaires ou ramifiées avec de 2 à 10 atomes de carbone.

3. Composition de polypropylène selon la revendication 1 ou 2, **caractérisée en ce que** le composé d'acide carboxylique insaturé est greffé sur le copolymère statistique et sur le terpolymère statistique.

4. Composition de polypropylène selon l'une quelconque des revendications 1 à 3, **caractérisée en ce que** la neutralisation du composé d'acide carboxylique insaturé a lieu avec des cations choisis dans le groupe consistant en métaux alcalins, métaux alcalinoterreux et éléments du groupe IIB du tableau périodique ou un mélange de ceux-ci.

5. Composition de polypropylène selon la revendication 4, **caractérisée en ce qu'**on utilise comme cations du zinc, du sodium ou des mélanges de ceux-ci.

6. Composition de polypropylène selon l'une quelconque des revendications 1 à 5, **caractérisée en ce que** le composé d'acide carboxylique insaturé est un anhydride d'acide carboxylique insaturé.

7. Composition de polypropylène selon la revendication 6, **caractérisée en ce que** l'anhydride d'acide carboxylique insaturé est de l'anhydride d'acide maléique.

8. Composition de polypropylène selon l'une quelconque des revendications 1 à 7, **caractérisée en ce que** la teneur en polyéther - bloc - amide de la composition de polypropylène est de 10 à 50 % en poids.

9. Composition de polypropylène selon l'une quelconque des revendications 1 à 8, **caractérisée en ce que** le polyéther - bloc - amide a la formule I
HO-[CO-PA-CO-PE-O]ₙ-H (I)
PA indiquant la fraction polyamide et PE la fraction polyéther et 10 ≤ n ≤ 60.

10. Composition de polypropylène selon la revendication 9, **caractérisée en ce que** la fraction polyéther est un polyéther de la formule II [-CH₂-CH₂-O-]m (II), de la formule III,
[-CH₂-CH(CH₃)-O-]ₘ (III)
ou de la formule IV [CH₂-CH₂-CH₂-CH₂-O]ₘ (IV) et m étant un nombre entier de 10 à 100.

11. Composition de polypropylène selon la revendication 9 ou 10, **caractérisée en ce que** la fraction polyamide est choisie dans le groupe consistant en polyamide 6; polyamide 6,6; polyamide 11; polyamide 12; polyamide 6,12; polyamide 6,11.

12. Composition de polypropylène selon l'une quelconque des revendications 9 à 11, **caractérisée en ce que** la fraction polyamide est du polyamide 12 et la fraction polyéther a la formule II [-CH₂ - CH₂ - O -]m (II) et dans laquelle m est un nombre entier de 10 à 100.

13. Procédé pour produire la composition de polypropylène selon l'une quelconque des revendications 1 à 12, **caractérisé en ce que** les composants sont mélangés dans une installation de compoundage et fondus à une température de 180° C à 240° C, refroidis dans un bain d'eau et ensuite granulés.

14. Utilisation de la composition de polypropylène selon l'une quelconque des revendications 1 à 12 pour la production de films de polypropylène présentant de meilleures propriétés antistatiques et anti-rosée.

15. Film produit à partir de la composition de polypropylène selon l'une quelconque des revendications 1 à 12 ayant des propriétés antistatiques et anti-rosée permanentes.

16. Film selon la revendication 15, **caractérisé en ce que** le film est un simple film produit à partir de la composition de polypropylène selon l'une quelconque des revendications 1 à 12.

17. Film selon la revendication 15, **caractérisé en ce que** le film est un film coextrudé comprenant au moins deux couches dont au moins une couche contient la composition de polypropylène selon les revendications 1 à 12.

18. Film selon la revendication 17, **caractérisé en ce que** le film est un film coextrudé multicouche comprenant la suite de couches A - B ou A - B - A, A - B - C - B - A, la couche B et / ou la couche C contenant une polyoléfine choisie dans le groupe consistant en polyéthylène, polyéthylène linéaire basse densité, polyéthylène basse densité, polyéthylène métallocène linéaire basse densité, homopolymère de polypropylène, copolymère bloc de polypropylène, copolymère ou terpolymère statistique de polypropylène, copolymère d'éthylène - ester de vinyle, polybutylène, polyméthylpentène, et la couche A contenant la composition de polypropylène selon l'une des revendications 1 à 12.

19. Film selon la revendication 18, **caractérisé en ce que** la couche A est d'environ 0,5 à 20 µm et les autres couches constituent le reste de l'épaisseur du film.
